# EUROPEAN PATENT APPLICATION

(11) **EP 4 819 045 A2**
(43) Date of publication of application: **07.10.2026**
(21) Application number: 26200074.8
(22) Date of filing: 21.08.2026
(51) Int. Cl.: G06T 7/70, G06T 7/73, G06T 17/00

(54) **METHOD FOR DETERMINING DIRECTION OF THREE-DIMENSIONAL OBJECT, MEDIUM AND ELECTRONIC DEVICE**

(30) Priority: 14.01.2026 CN 202610048772
(71) Applicant: XG TECH PTE. LTD., Singapore 179098 (SG)
(72) Inventor: LIN, Wei, 179098 Singapore (SG); GONG, Yichen, 179098 Singapore (SG)
(74) Representative: v. Bezold & Partner Patentanwälte - PartG mbB

(57) **Abstract**

Embodiments of the present disclosure relate to the technical field of computer graphics, and provide a method for determining a direction of a three-dimensional object, a medium and an electronic device. The method includes: determining first orientation information corresponding to the three-dimensional object based on the three-dimensional object and a reference object, where the reference object is disposed in a preset direction in a local coordinate system corresponding to the three-dimensional object; determining second orientation information corresponding to the three-dimensional object based on a geometric feature of the three-dimensional object; and determining a current orientation of the three-dimensional object in the local coordinate system based on the first orientation information and the second orientation information. According to the method provided in the present disclosure, automatic identification of the orientation of the three-dimensional object can be implemented.

## Description

### TECHNICAL FIELD

The present disclosure relates to the technical field of computer graphics, and in particular, to a method for determining a direction of a three-dimensional object, a medium and an electronic device.

### BACKGROUND

With rapid development of generative artificial intelligence, technologies for generating three-dimensional models (hereinafter referred to as three-dimensional objects) through text or images (text-to-3D or image-to-3D) are becoming increasingly mature, which greatly enriches sources of three-dimensional digital assets and lowers barriers to content creation. However, a default "front" orientation of these AI-generated three-dimensional objects is usually inconsistent with a "front" direction understood by human semantics. Therefore, before putting the three-dimensional objects into practical applications (such as game engines, digital twins, and virtual simulations), it is needed to determine orientations of the three-dimensional objects.

### SUMMARY

Currently, an orientation of a three-dimensional object is typically described by manually opening the three-dimensional object and manually determining the orientation thereof, or by manually adding metadata to each model in an asset library. These orientation determining methods have low efficiency and are prone to human errors.

To resolve the foregoing technical problems, embodiments of the present disclosure provide a method for determining a direction of a three-dimensional object and an electronic device, which can comprehensively utilize approaches of visual and geometric features to achieve automatic identification of the orientation of the three-dimensional object.

According to a first aspect of the present disclosure, a method for determining a direction of a three-dimensional object is provided, including: determining first orientation information corresponding to the three-dimensional object based on the three-dimensional object and a reference object, where the reference object is disposed in a preset direction in a local coordinate system corresponding to the three-dimensional object; determining second orientation information corresponding to the three-dimensional object based on a geometric feature of the three-dimensional object; and determining a current orientation of the three-dimensional object in the local coordinate system based on the first orientation information and the second orientation information.

According to a second aspect of the present disclosure, an apparatus for determining a direction of a three-dimensional object is provided, including: a first orientation determining module, configured to determine first orientation information corresponding to the three-dimensional object based on the three-dimensional object and a reference object, where the reference object is disposed in a preset direction in a local coordinate system corresponding to the three-dimensional object; a second orientation determining module, configured to determine second orientation information corresponding to the three-dimensional object based on a geometric feature of the three-dimensional object; and a decision module, configured to determine a current orientation of the three-dimensional object in the local coordinate system based on the first orientation information and the second orientation information.

According to a third aspect of the present disclosure, an embodiment of the present disclosure provides an electronic device. The electronic device includes: a processor; and a memory, configured to store instructions executable by the processor. The processor is configured to read the executable instructions from the memory, and execute the executable instructions to implement the method for determining a direction of a three-dimensional object provided in the first aspect.

According to a fourth aspect of the present disclosure, an embodiment of the present disclosure provides a computer readable storage medium. The storage medium stores a computer program, and the computer program is used for implementing the method for determining a direction of a three-dimensional object provided in the first aspect.

According to the method for determining a direction of a three-dimensional object provided in the present disclosure, the first orientation information can be determined based on a relative orientation between the three-dimensional object and the reference object; and the second orientation information can be determined based on the geometric feature of the three-dimensional object itself. Further, the first orientation information and the second orientation information can be combined to obtain a final orientation determining result. In this way, compared with an approach of manually determining the orientation, in the embodiments of the present disclosure, the orientation of the three-dimensional object can be automatically identified. Moreover, in the embodiments of the present disclosure, approaches of visual and geometric features are comprehensively utilized, so that identification accuracy can be further improved on the basis of automatically identifying the orientation of the three-dimensional object.

### BRIEF DESCRIPTION OF THE DRAWINGS

By describing embodiments of the present disclosure in more detail with reference to accompanying drawings, the foregoing and other objectives, features, and advantages of the present disclosure will become more apparent. The accompanying drawings are used to provide further understanding of the embodiments of the present disclosure, and constitute a part of the specification. Together with the embodiments of the present disclosure, the accompanying drawings are used to explain the present disclosure, and do not constitute a limitation on the present disclosure. In the accompanying drawings, same reference numerals generally represent same components or steps.
FIG. 1 is a schematic diagram of an application scenario of a method for determining a direction of a three-dimensional object according to an exemplary embodiment of the present disclosure;
FIG. 2 is a schematic flowchart of a method for determining a direction of a three-dimensional object according to an exemplary embodiment of the present disclosure;
FIG. 3 is a schematic diagram illustrating placement of a three-dimensional object and a reference object according to an exemplary embodiment of the present disclosure;
FIG. 4 is a schematic flowchart of a method for determining a direction of a three-dimensional object according to another exemplary embodiment of the present disclosure;
FIG. 5 is a schematic flowchart of a method for determining a direction of a three-dimensional object according to still another exemplary embodiment of the present disclosure;
FIG. 6 is a schematic flowchart of a method for determining a direction of a three-dimensional object according to a fourth exemplary embodiment of the present disclosure;
FIG. 7 is a schematic flowchart of a method for determining a direction of a three-dimensional object according to a fifth exemplary embodiment of the present disclosure;
FIG. 8 is a schematic flowchart of a method for determining a direction of a three-dimensional object according to a sixth exemplary embodiment of the present disclosure;
FIG. 9 is a schematic flowchart of a method for determining a direction of a three-dimensional object according to a seventh exemplary embodiment of the present disclosure;
FIG. 10 is a schematic flowchart of a method for determining a direction of a three-dimensional object according to an eighth exemplary embodiment of the present disclosure;
FIG. 11 is a schematic flowchart of a method for determining a direction of a three-dimensional object according to a ninth exemplary embodiment of the present disclosure;
FIG. 12 is a schematic flowchart of a method for determining a direction of a three-dimensional object according to a tenth exemplary embodiment of the present disclosure;
FIG. 13 is a schematic flowchart of a method for determining a direction of a three-dimensional object according to an eleventh exemplary embodiment of the present disclosure;
FIG. 14 is a schematic flowchart of a method for determining a direction of a three-dimensional object according to a twelfth exemplary embodiment of the present disclosure;
FIG. 15 is a schematic diagram of a structure of an apparatus for determining a direction of a three-dimensional object according to an exemplary embodiment of the present disclosure;
FIG. 16 is a schematic diagram of a structure of an apparatus for determining a direction of a three-dimensional object according to another exemplary embodiment of the present disclosure; and
FIG. 17 is a diagram of a structure of an electronic device according to an exemplary embodiment of the present disclosure.

### DETAILED DESCRIPTION OF THE EMBODIMENTS

Exemplary embodiments of the present disclosure are described below in detail with reference to accompanying drawings. Obviously, the embodiments described are merely some, rather than all of embodiments of the present disclosure. It should be understood that the present disclosure is not limited by the exemplary embodiments described herein.

It should be noted that, unless otherwise specifically stated, the relative arrangement of components and steps, numerical expressions, and numerical values set forth in these embodiments do not limit the scope of the present disclosure.

### Application overview

With rapid development of generative artificial intelligence, technologies for generating three-dimensional objects through text or images (text-to-3D or image-to-3D) are becoming increasingly mature, which greatly enriches sources of three-dimensional digital assets and lowers barriers to content creation. However, a default "front" orientation of these AI-generated three-dimensional objects is usually inconsistent with a "front" direction understood by human semantics. Therefore, before putting the three-dimensional objects into practical applications (such as game engines, digital twins, and virtual simulations), it is needed to determine orientations of the three-dimensional objects.

Currently, the orientations of the three-dimensional objects are typically determined through manual inspection. For example, an operator may open the three-dimensional objects one by one in 3D modeling software, and manually determine the orientations thereof. However, the approach of manual inspection has low efficiency and is difficult to implement large-scale batch inspection, and therefore cannot cope with massive assets produced in the AI era.

Another approach is to determine the orientation of the three-dimensional object by agreeing on metadata. For example, metadata may be manually added to each three-dimensional object in an asset library, and a correct orientation vector of the three-dimensional object may be described through the metadata. However, manually adding the metadata also requires extensive manual intervention, and is prone to human errors or inconsistent labeling.

Therefore, there is an urgent need for an automatic, accurate, and universal orientation determining method to resolve an orientation determining problem for massive 3D assets.

Embodiments of the present disclosure propose a novel solution capable of resolving problems that a current identification method depends on manual labor, has low efficiency, and is error-prone. Specifically, the embodiments of the present disclosure provide a method for determining a direction of a three-dimensional object. First orientation information can be determined based on a relative orientation between the three-dimensional object and a reference object; second orientation information can be determined based on a geometric feature of the three-dimensional object itself; and finally, an orientation of the three-dimensional object in a local coordinate system can be determined by fusing the first orientation information and the second orientation information. In this way, compared with the approaches of manual inspection and manually adding the metadata, in the embodiments of the present disclosure, the orientation of the three-dimensional object can be automatically identified. Moreover, in the embodiments of the present disclosure, approaches of visual and geometric features are comprehensively utilized, so that identification accuracy can be further improved on the basis of automatically identifying the orientation of the three-dimensional object.

### Exemplary system

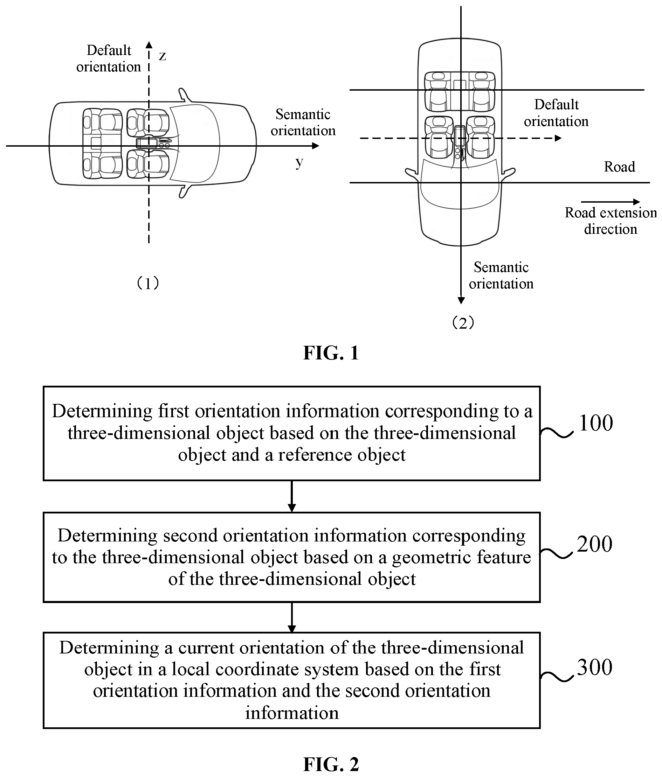

FIG. 1 is a schematic diagram of an application scenario of a method for determining a direction of a three-dimensional object according to an exemplary embodiment of the present disclosure.

Part (1) in FIG. 1 includes an AI-generated three-dimensional object (such as a car in FIG. 1). For this three-dimensional object, a default orientation thereof (such as a dashed line with an arrow in part (1) of FIG. 1) is a technical label, and usually corresponds to a certain axis in a local coordinate system. For example, the default orientation of the car in FIG. 1 points toward a positive Z-axis direction. The semantic orientation of this three-dimensional object (such as a solid line with an arrow in part (1) of FIG. 1) is a common-sense concept, and usually refers to a direction in which the object naturally faces. For example, the front of the car in FIG. 1 points toward a positive Y-axis direction.

In procedural content generation or automated scene layout, it is usually needed to place the three-dimensional object according to a placement rule, such as "place the car on a road, so that the car faces a road extension direction". In this case, if an orientation of the three-dimensional object is not normalized, that is, a default orientation and a semantic orientation of the three-dimensional object are not aligned, the three-dimensional object cannot be correctly placed. As shown in part (2) of FIG. 1, placing the car based on the default orientation (that is, placing the car on the road, so that the default orientation of the car points toward the road extension direction) may cause the car to be positioned transversely on the road, rather than with the front of the car facing the road extension direction.

It should be noted that, to clearly and intuitively demonstrate a core principle and a positional relationship of the present disclosure, FIG. 1 only uses a two-dimensional schematic diagram to present problems of orientations of three-dimensional scenes and three-dimensional objects. This does not mean that the present disclosure is limited to processing two-dimensional images or identifying two-dimensional directional information. The embodiments of the present disclosure are all directed to three-dimensional scenes and three-dimensional objects, and simplified presentation in FIG. 1 is merely for ease of understanding.

Therefore, for a scenario shown in FIG. 1, automatic identification may be performed on the orientation of the three-dimensional object through a system provided in the embodiments of the present disclosure, for example, to determine an included angle between the semantic orientation of the three-dimensional object and the default orientation in the local coordinate system, so that through a rotation transformation, the semantic orientation of the three-dimensional object is aligned with a target direction (such as a road direction) required by the placement rule.

Specifically, the system provided in the present disclosure includes a first orientation determining module, a second orientation determining module, and a decision module. The decision module communicates with the first orientation determining module and the second orientation determining module respectively, to receive first orientation information and second orientation information, and then comprehensively analyze them to determine an accurate current orientation of the three-dimensional object in the local coordinate system. The current orientation herein refers to the semantic orientation of the three-dimensional object.

In terms of software architectures, the system provided in the present disclosure may be deployed in, but is not limited to, environments such as Linux, Windows, or macOS.

In an example, the first orientation determining module may include a 3D rendering engine, such as a rendering engine based on OpenGL, Vulkan, or DirectX, or Unity, Unreal Engine, or Blender in a headless mode; and may be configured to perform multi-view rendering on the three-dimensional object. The first orientation determining module may further include a locally deployed multimodal model or an API interface for invoking a multimodal model, and may be configured to generate the first orientation information. The second orientation determining module may include a 3D geometry processing library, to generate the second orientation information based on a geometric feature of the three-dimensional object. The system provided in the present disclosure may also be equipped with a deep learning framework, such as PyTorch or TensorFlow, for operation and inference of relevant models.

In terms of hardware deployment, the first orientation determining module, the second orientation determining module, and the decision module in the present disclosure may be integrated into a same electronic device, or may be deployed in a distributed manner on a plurality of different electronic devices. The electronic device may be a server, a workstation, or another device having a relatively high computing capability; and may also be a terminal-side device with limited hardware resources and computing power, such as a mobile phone, a tablet, or a vehicle-mounted terminal. The electronic device may include a processor, a storage, and a memory.

The processor may load and execute program instructions to implement the method for determining a direction of a three-dimensional object. In an example, the processor may include a central processing unit (CPU), and the CPU may be a multi-core CPU with a clock frequency of 3.0 GHz or above. The processor may further include a graphics processing unit (GPU), and the GPU may have a video memory of not less than 16 GB.

The storage may be configured to store program instructions executable by the processor. The processor may load and execute the program instructions in the storage to implement the method for determining a direction of a three-dimensional object. The storage may further be configured to store data, such as information about the three-dimensional object and temporary rendering files. In an example, the storage may be a high-speed solid-state drive SSD.

The memory may be configured to provide a high-speed data access space for the processor. In an example, the memory may be DDR4 of not less than 32 GB.

### Exemplary method

FIG. 2 is a schematic flowchart of a method for determining a direction of a three-dimensional object according to an exemplary embodiment of the present disclosure. As shown in FIG. 2, the method includes the following steps.

Step 100: Determining first orientation information corresponding to the three-dimensional object based on the three-dimensional object and a reference object.

In step 100, a system may first load the three-dimensional object into a lightweight 3D rendering engine (such as a customized engine based on Three.js, Filament, or OpenGL), and place the reference object in a local coordinate system corresponding to the three-dimensional object. Information about a possible semantic orientation of the three-dimensional object may be determined based on a relative positional relationship between the three-dimensional object and the reference object, which is denoted as first orientation information.

The reference object may be a visual reference with clear directionality and high contrast, such as a prominent red arrow or a panel labeled with a word "Front," serving as a visual anchor point when determining the first orientation information.

The reference object may be disposed in a preset direction in the local coordinate system corresponding to the three-dimensional object. In this way, since a direction of the reference object itself in the local coordinate system is known and constant, there is no need to separately calculate or calibrate the direction of the reference object, being advantageous for improving reliability of the reference object serving as a directional reference.

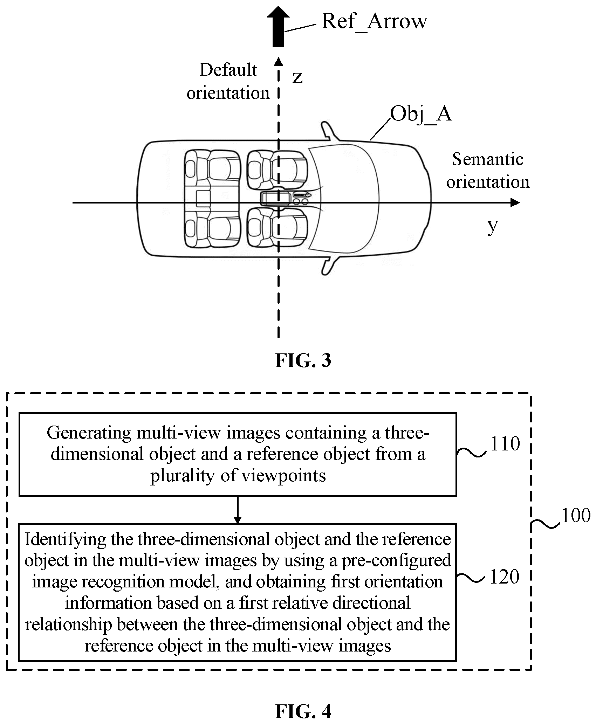

FIG. 3 is a schematic diagram illustrating placement of a three-dimensional object and a reference object according to an exemplary embodiment of the present disclosure. As shown in FIG. 3, in an example, in a local coordinate system corresponding to a three-dimensional object Obj_A, a reference object Ref_Arrow may be disposed in a positive Z-axis direction. In this way, by analyzing a relative direction between the three-dimensional object and the reference object, an included angle between the semantic orientation of the three-dimensional object and the positive Z-axis direction may be determined through an image recognition model such as a multimodal large language model.

In an example, in the local coordinate system corresponding to the three-dimensional object, the reference object may be disposed in a target direction towards which the three-dimensional object is expected to face, such as a road extension direction in the example corresponding to FIG. 1 described above. In this way, by analyzing the relative direction between the three-dimensional object and the reference object, an included angle between the semantic orientation of the three-dimensional object and the target direction may be directly obtained. For example, for a scenario shown in part (2) of FIG. 1, it may be obtained that an included angle between the semantic orientation of the car and the target direction (the road extension direction) is 90°.

In an example, before determining the first orientation information based on the relative positional relationship between the three-dimensional object and the reference object, normalization processing may also be performed on a size of the three-dimensional object, and the three-dimensional object may be placed at an origin of a three-dimensional scene. For example, a centroid of the three-dimensional object may be coincided with the origin, and then the centroid of the three-dimensional object may be used as a scaling center. A maximum distance from vertexes of the three-dimensional object to the centroid is calculated, and a scaling factor is determined based on the maximum distance. All vertexes of the three-dimensional object are scaled based on the scaling factor. In this way, after the scaling processing, the maximum distance is normalized to a preset standard value, such as a unit length of 1. Through the normalization processing, influence of differences in sizes of the three-dimensional object on the orientation determining can be eliminated, thereby further improving accuracy of the first orientation information.

Step 200: Determining second orientation information corresponding to the three-dimensional object based on a geometric feature of the three-dimensional object.

In step 200, the system extracts the geometric feature of the three-dimensional object by analyzing geometric information such as vertex data of the three-dimensional object, and then determines the information about the possible semantic orientation of the three-dimensional object by analyzing characteristics such as a geometric shape and a symmetry of the three-dimensional object, where the information about the possible semantic orientation of the three-dimensional object is denoted as the second orientation information. In this way, the determining of the second orientation information does not depend on external references, but is entirely based on the geometric information of the three-dimensional object itself.

Step 300: Determining a current orientation of the three-dimensional object in a local coordinate system based on the first orientation information and the second orientation information.

In step 300, the first orientation information and the second orientation information are comprehensively analyzed to obtain a final orientation determining result (that is, the possible semantic orientation of the three-dimensional object that is determined by the system) by combining information from aspects of visual and geometric shapes, to serve as the current orientation of the three-dimensional object in the local coordinate system.

For example, corresponding weights may be assigned to the first orientation information and the second orientation information, and then weighted averaging may be performed. For example, the first orientation information indicates that an included angle between a semantic orientation and a default orientation of a three-dimensional object a is 90°, and the second orientation information indicates that an included angle between the semantic orientation and the default orientation of the three-dimensional object a is 80°. If weights of 0.5 are respectively assigned to the first orientation information and the second orientation information, it may be determined through weighted averaging that the current orientation of the three-dimensional object in the local coordinate system is: deviating from the default orientation by 85°.

For another example, if the first orientation information indicates that the included angle between the semantic orientation and the default orientation of the three-dimensional object a is -90° (it may be determined that the semantic orientation of the three-dimensional object a is a +x direction), and the second orientation information indicates that the semantic orientation of the three-dimensional object a is the +x direction or a -x direction, the first orientation information and the second orientation information may be comprehensively analyzed to confirm that the current orientation of the three-dimensional object is the +x direction.

It may be learned from the foregoing technical solutions that according to the method provided in the embodiments of the present disclosure, the first orientation information is determined based on the relative orientation between the three-dimensional object and the reference object; the second orientation information is determined based on the geometric feature of the three-dimensional object itself; and finally, the orientation of the three-dimensional object in the local coordinate system is determined by combining the first orientation information and the second orientation information. In this way, compared with approaches of manual inspection and manually adding metadata, in the embodiments of the present disclosure, the orientation of the three-dimensional object can be automatically identified. Therefore, efficiency of orientation determining can be improved, and massive three-dimensional assets produced in the AI era can be coped with. Moreover, approaches of visual and geometric features are comprehensively utilized in the embodiments of the present disclosure. Through mutual verification and complementation of two different approaches, identification accuracy can be further improved on the basis of automatically identifying the orientation of the three-dimensional object.

FIG. 4 is a schematic flowchart of a method for determining a direction of a three-dimensional object according to another exemplary embodiment of the present disclosure. As shown in FIG. 4, on the basis of the embodiment shown in FIG. 2, step 100 may include the following steps.

Step 110: Generating multi-view images containing the three-dimensional object and the reference object from a plurality of viewpoints.

In step 110, after placing the reference object, the system may take snapshots of the three-dimensional scene containing the three-dimensional object and the reference object from a plurality of preset viewpoints by using virtual cameras, so as to generate two-dimensional images containing the three-dimensional object and the reference object (hereinafter referred to as multi-view images).

In an example, a virtual camera array may be disposed on a horizontal plane around the origin of the three-dimensional scene. For example, the virtual cameras may be disposed at a plurality of angles to form the virtual camera array. For example, the virtual cameras may also be disposed at other angles, such as angles of 0°, 45°, 90°, 135°, and 180°. Subsequently, the system may use the virtual cameras in the virtual camera array to capture the three-dimensional object and the reference object in the three-dimensional scene from a plurality of viewpoints at a fixed distance and height. In this way, it may be ensured that main sides of the three-dimensional object are all captured. Therefore, it can be ensured that visual features of different sides of the three-dimensional object are obtained. Thereafter, a rendering pipeline may be executed to render image content captured by the virtual cameras into two-dimensional images. In this way, a set of multi-view images obtained by observing the three-dimensional object and the reference object from different viewpoints may be obtained, to serve as a basis for vision-based orientation identification.

Step 120: Identifying the three-dimensional object and the reference object in the multi-view images by using a pre-configured image recognition model, and obtaining the first orientation information based on a first relative directional relationship between the three-dimensional object and the reference object in the multi-view images.

In step 120, the system inputs the rendered multi-view images into the pre-configured image recognition model. The image recognition model is an artificial intelligence model having an image recognition capability. For example, the image recognition model may be a multimodal large language model. In this way, the image recognition model may identify content in the multi-view images and make a judgment to obtain the first orientation information.

Specifically, the image recognition model may analyze the content in the multi-view images, identify the three-dimensional object and the reference object (such as identifying the car and the arrow in FIG. 3 described above), and determine a spatial relationship between the three-dimensional object and the reference object (hereinafter referred to as the first relative directional relationship). Thereafter, the image recognition model may infer and output the first orientation information of the three-dimensional object based on built-in knowledge of the image recognition model (for example, a direction pointed to by the front of the car is a front direction).

It may be learned from the foregoing technical solutions that according to the method provided in the embodiments of the present disclosure, the multi-view images containing the three-dimensional object and the reference object are generated from a plurality of viewpoints, so that the visual features of the three-dimensional object from different viewpoints can be comprehensively captured, thereby avoiding problems of occlusion or information loss existing in a single viewpoint. Therefore, accuracy of orientation determining can be improved. On this basis, the multi-view images are analyzed by using the image recognition model, and a cognitive capability of the image recognition model may be utilized to identify relative positions of the three-dimensional object and the reference object. In this way, the first orientation information of the three-dimensional object may be intuitively derived from a visual dimension.

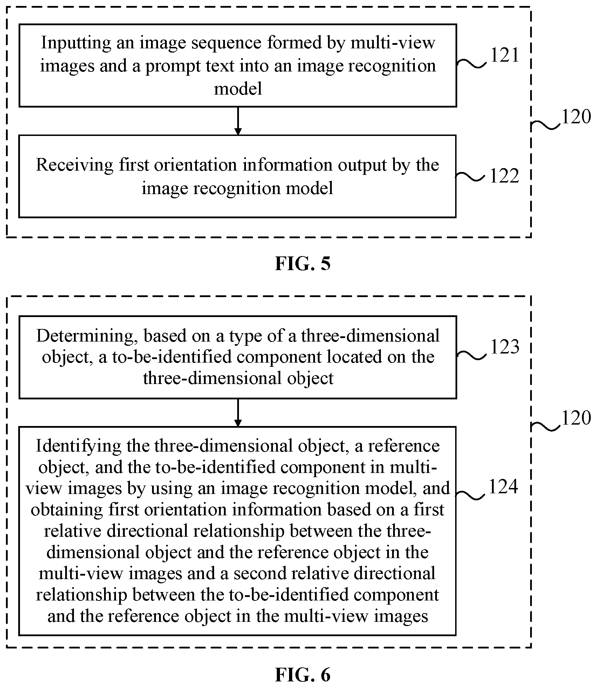

FIG. 5 is a schematic flowchart of a method for determining a direction of a three-dimensional object according to still another exemplary embodiment of the present disclosure. As shown in FIG. 5, on the basis of the embodiment shown in FIG. 4, step 120 may include the following steps.

Step 121: Inputting an image sequence formed by the multi-view images and a prompt text into the image recognition model.

In step 121, the image recognition model may be a multimodal model, and may receive and process image information and text information. In this way, the system may input the image sequence formed by the multi-view images and the prompt text into the image recognition model, so as to prompt the image recognition model by using the prompt text to generate the first orientation information based on the multi-view images.

In an example, the prompt text includes reference direction information corresponding to the local coordinate system. A reference direction may be the target direction towards which the three-dimensional object is expected to face, such as a standard front direction in the local coordinate system. As described in the embodiment shown in FIG. 3, the default orientation of the three-dimensional object may be defined as the reference direction (not shown in FIG. 3). In this way, the reference object is located in the reference direction of the three-dimensional object, and the prompt text may include "These are a set of images of the three-dimensional object taken from different angles. The reference object (such as a 'red arrow') in the images points to the standard front direction. Please determine which direction the front of the three-dimensional object (such as 'a vehicle') is currently facing. If the reference object is taken as 0°, how many degrees does the three-dimensional object need to be rotated clockwise to align with the front direction?"

Thereafter, the image recognition model may identify the three-dimensional object and the reference object in the multi-view images based on the prompt text, and obtain the first orientation information based on the first relative directional relationship between the three-dimensional object and the reference object in the multi-view images. The first orientation information may include an included angle between the orientation of the three-dimensional object in the local coordinate system and the reference direction. For example, for the foregoing example, the image recognition model may identify the car and the red arrow in the multi-view images, and determine the included angle between the orientation of the car and the reference direction based on the first relative directional relationship between the car and the red arrow and the direction indicated by the red arrow, such as "the front of the car currently faces a 90° direction".

In some examples, the first orientation information may also include an angle by which the three-dimensional object needs to be rotated to face the reference direction, such as an angle by which the vehicle needs to be rotated to face the standard front direction. For example, "the vehicle needs to be rotated by -90°" or "the vehicle needs to be rotated to the left by 90°".

Step 122: Receiving the first orientation information output by the image recognition model.

In step 122, after the first orientation information is generated by the image recognition model, the system may receive the first orientation information output by the image recognition model for subsequent fusion processing with the second orientation information.

It may be learned from the foregoing technical solutions that according to the method provided in the embodiments of the present disclosure, the multi-view images and the prompt text can be input into the multimodal image recognition model. An understanding capability of the image recognition model for the prompt text is utilized to more precisely understand an inference task to be performed. An image parsing capability of the image recognition model for the multi-view images is utilized to complete the inference task and obtain the first orientation information. On this basis, the prompt text includes the reference direction information, which can provide an inference basis for the image recognition model and avoid identification deviations caused by ambiguity in understanding by the image recognition model, thereby being advantageous for improving accuracy of the first orientation information.

FIG. 6 is a schematic flowchart of a method for determining a direction of a three-dimensional object according to a fourth exemplary embodiment of the present disclosure. As shown in FIG. 6, on the basis of the embodiment shown in FIG. 4, step 120 includes the following steps.

Step 123: Determining, based on a type of the three-dimensional object, a to-be-identified component located on the three-dimensional object.

In step 123, to further improve the accuracy of orientation determining, when generating the first orientation information, a position of the to-be-identified component on the three-dimensional object may be referred to. The to-be-identified component is a structural component related to the orientation of the three-dimensional object, and may be determined based on the type of the three-dimensional object. For example, if the three-dimensional object is of a firearm type, the to-be-identified component may be a muzzle; and if the three-dimensional object is of a vehicle type, the to-be-identified component may be a headlight.

In some examples, the system may pre-establish a mapping relationship between the type of the three-dimensional object and the to-be-identified component. In this way, after the type of the three-dimensional object is determined, the corresponding to-be-identified component may be determined based on the mapping relationship. The type of the three-dimensional object may be determined by parsing metadata of the three-dimensional object. The metadata refers to descriptive information embedded within a file of the three-dimensional object or associated with the three-dimensional object, and may include, but is not limited to, a name, a tag, and a custom attribute of the three-dimensional object. In some examples, the metadata may include type information of the three-dimensional object. In addition, the type of the three-dimensional object may also be determined by analyzing the multi-view images and the geometric feature of the three-dimensional object by using a dedicated classification model, or may be determined through manual labeling.

After the to-be-identified component is determined based on the mapping relationship, a prompt text containing information corresponding to the to-be-identified component may be input into the image recognition model, to prompt the image recognition model to identify the to-be-identified component and determine the orientation of the three-dimensional object based on an identification result. For example, prompt texts such as "Where is the headlight of this car?" and "Where is the muzzle of this gun?" may be input into the image recognition model to prompt the image recognition model to identify the headlight or the muzzle, and deduce an overall orientation of the vehicle or the gun based on the position of the headlight or the muzzle.

In some other examples, the system may only input the multi-view images into the image recognition model, which identifies the three-dimensional object in the multi-view images, and autonomously determines the type of the three-dimensional object and the to-be-identified component based on an identification result.

Step 124: Identifying the three-dimensional object, the reference object, and the to-be-identified component in the multi-view images by using the image recognition model, and obtaining the first orientation information based on the first relative directional relationship between the three-dimensional object and the reference object in the multi-view images and a second relative directional relationship between the to-be-identified component and the reference object in the multi-view images.

In step 124, the image recognition model identifies the three-dimensional object and the reference object in the multi-view images, and identifies the to-be-identified component on the three-dimensional object, so as to determine the first relative directional relationship between the three-dimensional object and the reference object, and the second relative directional relationship between the to-be-identified component on the three-dimensional object and the reference object in the multi-view images. In this way, the first relative directional relationship and the second relative directional relationship may be comprehensively analyzed to obtain the final first orientation information.

In some examples, the first relative directional relationship and the second relative directional relationship may be cross-verified, or the first relative directional relationship may be verified through the second relative directional relationship, to obtain the first orientation information.

For example, if the three-dimensional object is a car, the reference object is an arrow pointing to the standard front direction, and the to-be-identified component is a headlight, after identifying the car, the arrow, and the headlight in the multi-view images, the image recognition model determines the first relative directional relationship based on an overall contour of the car and the direction indicated by the arrow; for example, the first relative directional relationship shows that an orientation of the car is at a 90° included angle to the direction indicated by the arrow; and determines the second relative directional relationship based on an orientation of the position of the headlight that is relative to the arrow, for example, the second relative directional relationship shows that an orientation of the headlight is at a -90° included angle to the direction indicated by the arrow. In this case, the image recognition model may perform inference based on the position of the to-be-identified component on the three-dimensional object, for example, may back-infer based on that "the headlight is located at the front of the car," to determine that the rear of the car may be misidentified as the front when identifying the first relative directional relationship. Therefore, the first relative directional relationship may be corrected to obtain the final corrected first orientation information. For example, the first orientation information indicates that the included angle between the orientation of the car and the direction indicated by the arrow (the reference direction) is 90°, that is, a rotation of - 90° is required to align the front of the car with the direction of the arrow.

It may be learned from the foregoing technical solutions that according to the method provided in the embodiments of the present disclosure, the second orientation information can be generated based on the to-be-identified component on the three-dimensional object, and then through cross-verification between the first orientation information and the second orientation information, the orientation determining result can be corrected when the two are inconsistent, so as to obtain the final first orientation information. In this way, compared with an approach of determining the first orientation information merely based on the first relative directional relationship, this embodiment, combining the second relative directional relationship, has stronger robustness and is particularly suitable for three-dimensional objects with clear functional components, which can further improve the accuracy of orientation determining.

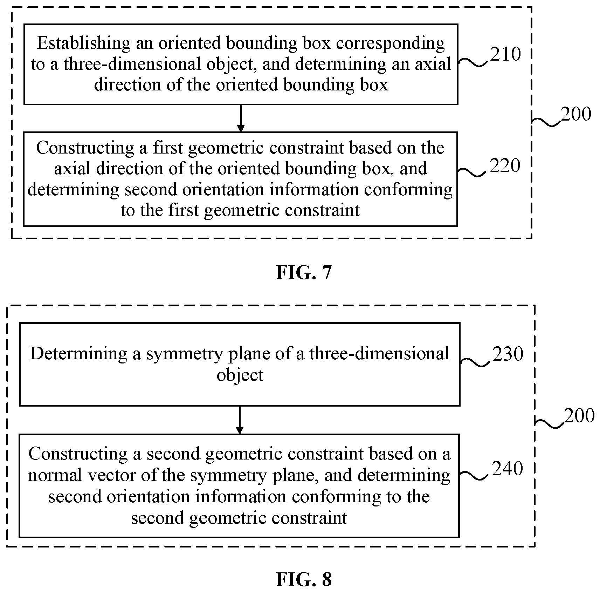

FIG. 7 is a schematic flowchart of a method for determining a direction of a three-dimensional object according to a fifth exemplary embodiment of the present disclosure. As shown in FIG. 7, on the basis of the embodiment shown in FIG. 2, step 200 may include the following steps.

Step 210: Establishing an oriented bounding box corresponding to the three-dimensional object, and determining an axial direction of the oriented bounding box.

In step 210, the system may first analyze vertex distribution of the three-dimensional object through principal component analysis (PCA), so as to establish the oriented bounding box (OBB) corresponding to the three-dimensional object. The oriented bounding box is a type of bounding box that changes with a direction of an object. In this embodiment of the present disclosure, the bounding box may be automatically adjusted according to a shape of the three-dimensional object, so as to wrap the three-dimensional object as tightly as possible.

After the oriented bounding box is established, the axial direction, such as one or more of a principal axis direction, a secondary principal axis direction, and a minor principal axis direction, of the oriented bounding box may be determined. A principal axis is a longest axis of the oriented bounding box, and the principal axis direction refers to a most prominent extension direction of the three-dimensional object in space. For example, for the car in the foregoing examples, a principal axis direction thereof may be a direction from the front to the rear of the car; and for a human figure, a principal axis direction thereof may be a direction from head to feet. The secondary principal axis direction and the minor principal axis direction respectively refer to a second most prominent extension direction and a least prominent extension direction of the three-dimensional object. Moreover, the principal axis direction, the secondary principal axis direction, and the minor principal axis direction are orthogonal pairwise.

Step 220: Constructing a first geometric constraint based on the axial direction of the oriented bounding box, and determining the second orientation information conforming to the first geometric constraint.

In step 220, it may be understood that the axial direction of the oriented bounding box of the three-dimensional object is usually related to a semantically forward-backward or left-right direction of the three-dimensional object. For example, for a vehicle-type three-dimensional object, the semantically forward-backward direction is usually consistent with the principal axis direction, the left-right direction is usually consistent with the secondary principal axis direction, and an up-down direction is usually consistent with the minor principal axis direction. Based on this, the first geometric constraint may be constructed based on the axial direction of the oriented bounding box, and further the second orientation information may be derived based on the first geometric constraint. For example, a first geometric constraint "the 'front' direction of the three-dimensional object needs to be approximately parallel to one of the three axial directions" may be generated. A first geometric constraint "for a vehicle-type three-dimensional object, the 'front' direction needs to be the principal axis direction or the secondary principal axis direction, and cannot be the minor principal axis direction perpendicular to the ground" may also be generated. In this way, for the car in the foregoing example, based on the first geometric constraint, two possible front directions may be analyzed: a direction parallel to the principal axis direction and a direction parallel to the secondary principal axis direction.

It may be learned from the foregoing technical solutions that according to the method provided in the embodiments of the present disclosure, through bounding box analysis, a geometric form of the three-dimensional object is analyzed from a macroscopic dimension perspective, and an extension direction related to a semantic direction of the three-dimensional object can be extracted from the geometric form, so as to generate the first geometric constraint. In this way, the second orientation information conforming to the first geometric constraint may be derived from a dimension of geometric features without relying on visual-related information.

FIG. 8 is a schematic flowchart of a method for determining a direction of a three-dimensional object according to a sixth exemplary embodiment of the present disclosure. As shown in FIG. 8, on the basis of the embodiment shown in FIG. 2, step 200 may include the following steps.

Step 230: Determining a symmetry plane of the three-dimensional object.

In step 230, the system may determine the symmetry plane of the three-dimensional object by analyzing the vertex of the three-dimensional object. A symmetry detection algorithm may be adopted to analyze the vertex of the three-dimensional object, such as comparing a distance between the vertex on one side and a reflected point on another side, and then compute the symmetry plane and a normal vector of the symmetry plane.

In some examples, a left-right symmetry plane of the three-dimensional object may be determined. For example, each of a vehicle, an animal, and a humanoid character has a left-right symmetry plane passing through a center. In this way, once the left-right symmetry plane of the three-dimensional object is determined, the semantically "front" direction of the three-dimensional object is usually parallel to the left-right symmetry plane, that is, is in a direction perpendicular to a normal vector of the left-right symmetry plane.

Step 240: Constructing a second geometric constraint based on a normal vector of the symmetry plane, and determining the second orientation information conforming to the second geometric constraint.

In step 240, it may be understood that a direction pointed to by the normal vector of the symmetry plane is usually related to the semantically forward-backward direction or left-right direction of the three-dimensional object. For example, the normal vector of the left-right symmetry plane usually refers to a semantically left-right direction of the three-dimensional object, and therefore is perpendicular to the semantically "front" direction (that is, the semantic orientation) of the three-dimensional object. Therefore, the second geometric constraint may be constructed based on the normal vector of the symmetry plane. For example, a second geometric constraint "if a left-right symmetry plane is detected, the 'front' direction of the three-dimensional object needs to be perpendicular to a normal direction of that plane" may be generated. In this way, for the car in the foregoing example, based on the second geometric constraint, a possible front direction may be analyzed: a direction perpendicular to the normal vector of the left-right symmetry plane.

It may be learned from the foregoing technical solutions that according to the method provided in the embodiments of the present disclosure, through symmetry analysis, a strong prior feature of symmetry is utilized to generate the second geometric constraint, assisting in determining the orientation of the three-dimensional object. In this way, the second orientation information conforming to the second geometric constraint may be derived from a dimension of geometric features without relying on visual-related information.

In some implementations, steps 210 and 220 and steps 230 and 240 may also be combined to jointly determine the final second orientation information, which simultaneously conforms to the first geometric constraint and the second geometric constraint. For example, for the car in the foregoing examples, the finally determined second orientation information needs to simultaneously conform to the first geometric constraint and the second geometric constraint described above: "the 'front' direction of the three-dimensional object needs to be approximately parallel to one of the three axial directions"; "for a vehicle-type three-dimensional object, the 'front' direction needs to be the principal axis direction or the secondary principal axis direction, and cannot be the minor principal axis direction perpendicular to the ground"; and "if a left-right symmetry plane is detected, the 'front' direction of the three-dimensional object needs to be perpendicular to a normal direction of that plane" In this way, by solving for a direction that simultaneously conforms to the foregoing three constraints, a candidate range can be narrowed, so as to obtain more precise second orientation information.

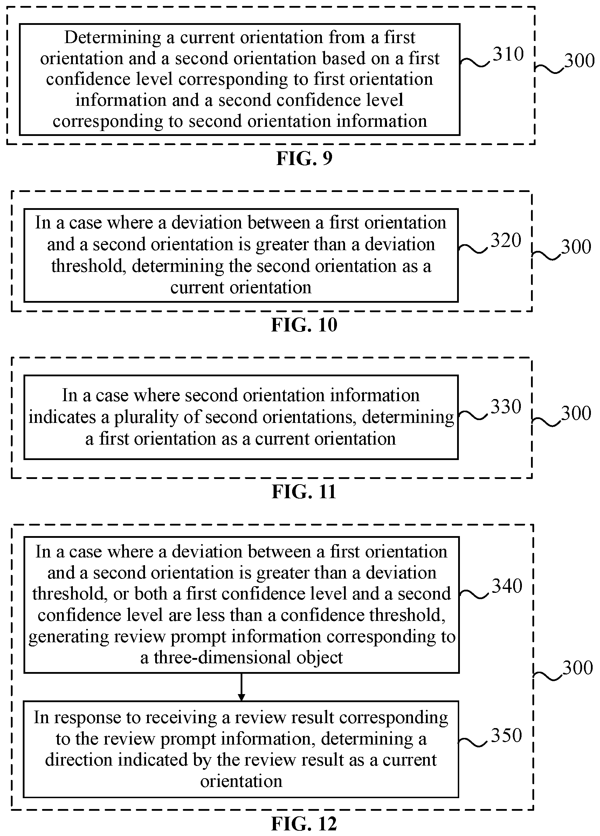

FIG. 9 is a schematic flowchart of a method for determining a direction of a three-dimensional object according to a seventh exemplary embodiment of the present disclosure. As shown in FIG. 9, on the basis of the embodiment shown in FIG. 2, step 300 may include the following step.

Step 310: Determining the current orientation from a first orientation and a second orientation based on a first confidence level corresponding to the first orientation information and a second confidence level corresponding to the second orientation information.

In step 310, the first orientation information, the second orientation information, and the confidence levels respectively corresponding to the first orientation information and the second orientation information may be comprehensively analyzed to obtain the current orientation of the three-dimensional object. The first confidence level corresponding to the first orientation information may be output by the image recognition model while outputting the first orientation information. The second confidence level corresponding to the second orientation information may be output by a second orientation determining module while outputting the second orientation information.

In an example, the final current orientation may be determined based on the first confidence level and the second confidence level by adopting approaches such as weighted voting. For example, if the first orientation information indicates that the first orientation may be a direction d1 or d2, where respective confidence levels of d1 and d2 are s1 and s2, and the second orientation information indicates that the second orientation may be the direction d1 or d2, where respective confidence levels of d1 and d2 are s3 and s4, it may be comprehensively determined that a total weight corresponding to the direction d1 is s1+s3, and a total weight corresponding to the direction d2 is s2+s4. Further, the current orientation of the three-dimensional object may be determined based on the direction with the higher total weight. In addition, the final current orientation may also be determined based on the first confidence level and the second confidence level by adopting approaches such as a logical decision tree.

In an example, a high-confidence-priority approach may be adopted. For example, the first confidence level corresponding to the first orientation information and the second confidence level corresponding to the second orientation information may be analyzed. If the confidence level corresponding to one piece of orientation information is significantly lower than that corresponding to the other piece of orientation information, or is lower than a preset confidence threshold, the other piece of orientation information may prevail.

In another example, for a case of a low confidence level, a consistent-orientation-adoption approach may be adopted. Specifically, when both the first confidence level and the second confidence level are relatively low, the current orientation of the three-dimensional object may be determined based on consistency between the first orientation and the second orientation. For example, if the first orientation and the second orientation are consistent, or a deviation between the first orientation and the second orientation is relatively small, one of the first orientation and the second orientation may be used as the current orientation.

For example, for a science-fiction spaceship model with an irregular shape and no obvious "head" or "tail", the image recognition model may provide the first orientation information with a low confidence level, or guess the first orientation information based on some weak features (such as reflection of cockpit glass), such as "the spaceship may need to be rotated by 180°". Similarly, a geometric analysis module may also be unable to find an obvious symmetry plane due to the irregular shape, and may only guess the second orientation information based on the approximate shape of the three-dimensional object, such as "the 'front' direction of the spaceship is most likely along a longest axis direction". In this case, if the first orientation and the second orientation exactly point to a same direction, this direction may be determined as the current orientation of the three-dimensional object. In this way, in a case of insufficient single-source information, the current orientation of the three-dimensional object may be inferred by comprehensively considering information from aspects of appearance and geometry. Even if the inference is incorrect, for example, a stern is mistakenly determined as a bow, resulting in a reversal of the front-rear direction, it can be at least ensured that a front-rear axis of the spaceship is aligned with the target direction. Therefore, compared with a completely random initial orientation, this is more suitable for automated scene layout.

It may be learned from the foregoing technical solutions that according to the method provided in the embodiments of the present disclosure, when a confidence level is relatively low, the current orientation of the three-dimensional object can be determined based on orientation information with a higher confidence level; and when both the first confidence level and the second confidence level are relatively low, the current orientation can be determined based on the consistency between the first orientation and the second orientation. In this way, orientation determining can be performed on the three-dimensional object in a case of insufficient information, being advantageous for improving practicality and reliability of the method for determining a direction of a three-dimensional object.

FIG. 10 is a schematic flowchart of a method for determining a direction of a three-dimensional object according to an eighth exemplary embodiment of the present disclosure. As shown in FIG. 10, on the basis of the embodiment shown in FIG. 2, step 300 may include the following step.

Step 320: In a case where a deviation between the first orientation and the second orientation is greater than a deviation threshold, determining the second orientation as the current orientation.

In step 320, a consistency check may be performed on the first orientation indicated by the first orientation information and the second orientation indicated by the second orientation information. If the consistency check fails, the second orientation may be determined as the current orientation based on a geometric analysis result.

In an example, if the deviation between the first orientation and the second orientation is relatively large, such as greater than the deviation threshold, the consistency check may be considered as failing. In this case, the second orientation prevails. For example, if the first orientation information indicates that the front of the car points in a certain direction, and that direction differs significantly from all second orientations indicated by the second orientation information (such as the three axial directions of the oriented bounding box), it may be considered that the first orientation information is mistakenly determined. Therefore, the second orientation indicated by the second orientation information prevails, and is determined as the current orientation of the vehicle.

It may be learned from the foregoing technical solutions that according to the method provided in the embodiments of the present disclosure, a corresponding decision rule is formulated for a case where the first orientation information conflicts with the second orientation information, so that it can be ensured that an accurate and reasonable orientation determining result can also be obtained in a complex situation, being advantageous for improving reliability and robustness of the orientation determining method.

FIG. 11 is a schematic flowchart of a method for determining a direction of a three-dimensional object according to a ninth exemplary embodiment of the present disclosure. As shown in FIG. 11, on the basis of the embodiment shown in FIG. 2, step 300 may include the following step.

Step 330: In a case where the second orientation information indicates a plurality of second orientations, determining the first orientation as the current orientation.

In step 330, if the second orientation information indicates a plurality of second orientations, it may be considered that the second orientation information itself is ambiguous. In this case, the first orientation may be determined as the current orientation based on a visual analysis result.

In an example, if the second orientation information indicates a plurality of second orientations, and a deviation between the first orientation and a certain second orientation u is relatively small, it may be considered that the second orientation information is ambiguous, and a consistency check between the first orientation and the second orientation u passes. In this case, the first orientation prevails. For example, if a front-rear axis direction of the car may be determined based on the geometric constraint, but directions of the front and the rear of the car cannot be accurately distinguished, the second orientation information may indicate two second orientations. However, the headlight and a taillight of the car can be clearly identified through visual analysis, so that the first orientation information can clearly indicate a direction of the front of the car (that is, the first orientation). In this case, the system determines the first orientation as the current orientation of the car based on the first orientation that can eliminate the ambiguity.

It may be learned from the foregoing technical solutions that according to the method provided in the embodiments of the present disclosure, a corresponding decision rule is formulated for the case where the second orientation information itself is ambiguous, so that it can be ensured that an accurate and reasonable orientation determining result can also be obtained in a complex situation, being advantageous for improving reliability and robustness of the orientation determining method.

FIG. 12 is a schematic flowchart of a method for determining a direction of a three-dimensional object according to a tenth exemplary embodiment of the present disclosure. As shown in FIG. 12, on the basis of the embodiment shown in FIG. 2, step 300 may include the following steps.

Step 340: In a case where the deviation between the first orientation and the second orientation is greater than the deviation threshold, or both the first confidence level and the second confidence level are less than a confidence threshold, generating review prompt information corresponding to the three-dimensional object.

In step 340, in a case where the system determines that the first orientation and the second orientation may be inaccurate, considering that reliability of a current automatic decision is relatively low, to ensure accuracy of the finally determined current orientation, the system may generate corresponding review prompt information and then submit the same for manual review.

In an example, if the deviation between the first orientation and the second orientation is relatively large, such as greater than the deviation threshold (such as 30°), it is considered that the visual analysis based on the appearance and the geometric analysis based on the geometric constraint conflict with each other. In this case, the system may generate the review prompt information corresponding to the three-dimensional object, and mark the three-dimensional object as "requiring manual review".

In another example, if both the first confidence level and the second confidence level are relatively low, the system may adopt the method in the foregoing example to determine the current orientation of the three-dimensional object based on the consistency between the first orientation and the second orientation, or may generate the review prompt information corresponding to the three-dimensional object for manual review by a human reviewer.

In addition, to improve efficiency of manual review, when submitting for manual review, the system may also send auxiliary information such as the multi-view images, first orientation determining information, and second orientation determining information, to the human reviewer, so that the human reviewer can quickly make a decision and obtain a review result.

Step 350: In response to receiving a review result corresponding to the review prompt information, determining a direction indicated by the review result as the current orientation.

In step 350, after receiving the review result returned by the human reviewer and corresponding to the review prompt information, the system may use the review result as a final determining basis, such as determining the direction indicated by the review result as the current orientation. In addition, log information related to this submission for manual review may also be recorded, so as to facilitate tracing of a determining process of the current orientation.

It may be learned from the foregoing technical solutions that according to the method provided in the embodiments of the present disclosure, when the system determines that reliability of automatic orientation identification is insufficient, submission is automatically performed for manual review. In this way, while ensuring automation of orientation determining, a fallback mechanism for handling difficult cases is established to ensure accuracy and reliability of the finally output current orientation.

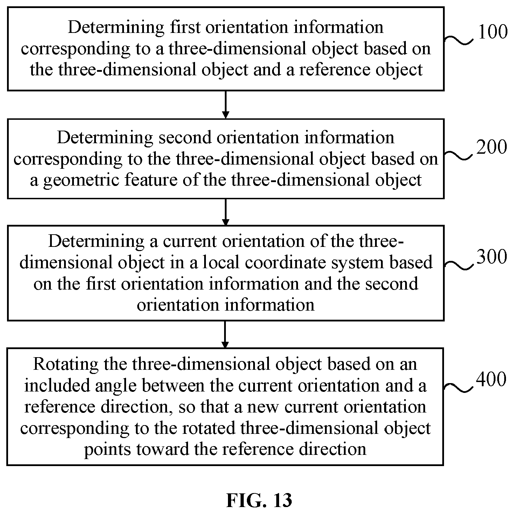

FIG. 13 is a schematic flowchart of a method for determining a direction of a three-dimensional object according to an eleventh exemplary embodiment of the present disclosure. As shown in FIG. 13, on the basis of the embodiment shown in FIG. 2, after step 300, the method may include the following step.

Step 400: Rotating the three-dimensional object based on the included angle between the current orientation and the reference direction, so that a new current orientation corresponding to the rotated three-dimensional object points toward the reference direction.

In step 400, after the current orientation of the three-dimensional object is determined, the three-dimensional object may be calibrated to a standard pose. For example, the system may calculate the included angle between the current orientation and the reference direction by adopting approaches such as vector dot product or cross product, and determine a rotation amount required to rotate from the current orientation to the reference direction. Subsequently, the system may apply the calculated rotation amount to a root node or all vertexes of the three-dimensional object, so that the three-dimensional object is rotated based on the rotation amount. For example, the car in the foregoing examples in FIG. 3 may be rotated until the front of the car points toward the road extension direction.

Thereafter, the rotated three-dimensional object may be exported in a same format or in a standard format required by a project. In this way, the current orientation of the exported three-dimensional object points toward the reference direction, and may be directly used by a downstream automation tool.

It may be learned from the foregoing technical solutions that according to the method provided in the embodiments of the present disclosure, after the orientation determining is completed, pose calibration can be performed on the three-dimensional object to align the semantic orientation of the three-dimensional object with the reference direction. In this way, the orientation of the calibrated three-dimensional object is normalized and may be directly used in a downstream process, such as game engine import or automatic scene layout.

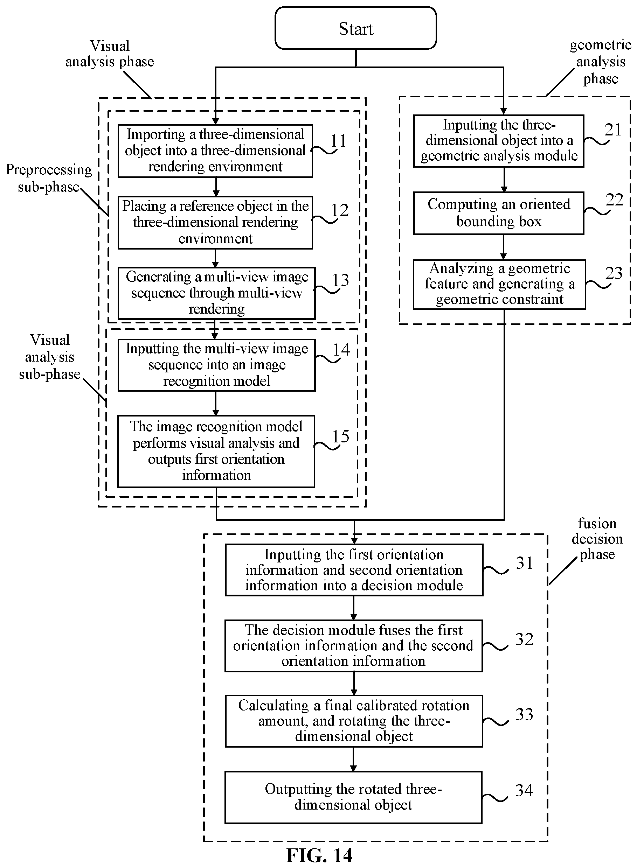

The method provided in the embodiments of the present disclosure is described below from an overall perspective with reference to FIG. 14.

FIG. 14 is a schematic flowchart of a method for determining a direction of a three-dimensional object according to a twelfth exemplary embodiment of the present disclosure. As shown in FIG. 14, the method includes a visual analysis phase, a geometric analysis phase, and a fusion decision phase, which are respectively used to determine the first orientation information, determine the second orientation information, and combine the first orientation information and the second orientation information, so as to determine the final current orientation.

As shown in FIG. 14, the visual analysis phase may include a preprocessing sub-phase and a visual analysis sub-phase. The preprocessing sub-phase may include the following steps.

Step 11: Importing the three-dimensional object into a three-dimensional rendering environment. The three-dimensional object is first imported, and is loaded into a 3D rendering engine.

Step 12: Placing the reference object in the three-dimensional rendering environment. In the 3D rendering engine, the reference object is placed in the local coordinate system corresponding to the three-dimensional object, such as placing an arrow pointing toward the reference direction.

Step 13: Generating a multi-view image sequence through multi-view rendering. Virtual cameras disposed at a plurality of angles are used to capture the three-dimensional object and the reference object, to obtain a plurality of images containing the three-dimensional object and the reference object, so as to form the multi-view image sequence.

After step 13, the visual analysis sub-phase is entered. The visual analysis sub-phase may include the following steps.

Step 14: Inputting the multi-view image sequence into the image recognition model. The multi-view image sequence is input into the pre-configured image recognition model, such as the multimodal large language model.

Step 15: The image recognition model performs visual analysis and outputs the first orientation information. The image recognition model is used to perform visual question-answering based on the multi-view image sequence and the prompt text, and outputs the first orientation information, such as "a clockwise rotation of 90° is required".

As shown in FIG. 14, the geometric analysis phase is independent of the visual analysis phase, and may be performed in parallel or in series with the visual analysis phase. The geometric analysis phase may include the following steps.

Step 21: Inputting the three-dimensional object into a geometric analysis module. The three-dimensional object is input into the pre-configured second orientation determining module (also referred to as a geometric analysis module) to perform geometric verification by using the second orientation determining module.

Step 22: Computing the oriented bounding box. The second orientation determining module first computes the oriented bounding box of the three-dimensional object.

Step 23: Analyzing a geometric feature and generating a geometric constraint. The second orientation determining module may analyze features such as the axial direction of the oriented bounding box and the symmetry of the three-dimensional object, and then generate geometric constraints, such as the first geometric constraint and the second geometric constraint in the foregoing examples. In this way, the second orientation information may be determined based on the geometric constraints, such as "the front direction needs to be along one of two longest axes".

As shown in FIG. 14, the fusion decision phase may include the following steps.

Step 31: Inputting the first orientation information and the second orientation information into a decision module.

Step 32: The decision module fuses the first orientation information and the second orientation information. The decision module may fuse the first orientation information obtained in the visual analysis phase and the second orientation information obtained in the geometric verification phase, to obtain the current orientation of the three-dimensional object.

Step 33: Calculating a final calibrated rotation amount, and rotating the three-dimensional object. After the current orientation is determined, the rotation amount may also be calculated based on the current orientation and the reference direction, and then the three-dimensional object may be rotated based on the rotation amount, so as to achieve pose calibration of the three-dimensional object.

Step 34: Outputting the rotated three-dimensional object. The rotated and orientation-normalized three-dimensional object is output.

For detailed description of the steps of this embodiment, please refer to the other embodiments described above, and details are not described herein.

### Exemplary apparatus

The method for determining a direction of a three-dimensional object provided in the embodiments of the present disclosure is described above. It may be understood that to implement functions of the method for determining a direction of a three-dimensional object, an integrated circuit system may include corresponding hardware and software for implementing functions of the hardware.

A person skilled in the art should easily conceive that, in combination with the steps of the method for determining a direction of a three-dimensional object described in the embodiments of the present disclosure, the embodiments of the present disclosure can be implemented in a form of hardware or a combination of software-driven hardware. Whether a certain function is implemented in a form of hardware or software-driven hardware depends on specific application and design constraints of the technical solutions. A person skilled in the art may use different methods to implement the described functions for each specific application, but such implementation should not be considered beyond the scope of the present disclosure.

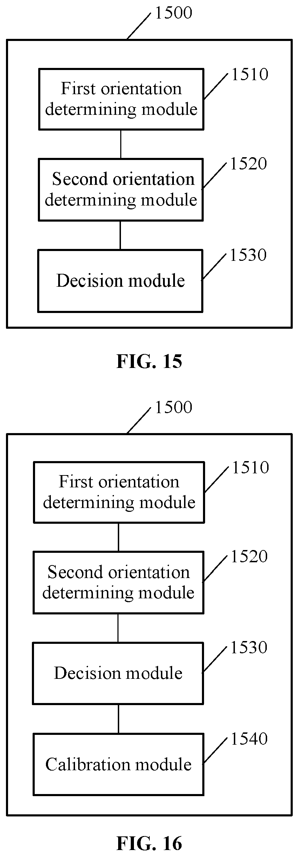

FIG. 15 is a schematic diagram of a structure of an apparatus for determining a direction of a three-dimensional object according to an exemplary embodiment of the present disclosure. As shown in FIG. 15, in an embodiment, an apparatus 1500 for determining a direction of a three-dimensional object includes a first orientation determining module 1510, a second orientation determining module 1520, and a decision module 1530.

The first orientation determining module 1510 is configured to determine first orientation information corresponding to the three-dimensional object based on the three-dimensional object and a reference object, where the reference object is disposed in a preset direction in a local coordinate system corresponding to the three-dimensional object. The second orientation determining module 1520 is configured to determine second orientation information corresponding to the three-dimensional object based on a geometric feature of the three-dimensional object. The decision module 1530 is configured to determine a current orientation of the three-dimensional object in the local coordinate system based on the first orientation information and the second orientation information.

In an exemplary embodiment, the first orientation determining module 1510 is configured to: generate multi-view images containing the three-dimensional object and the reference object from a plurality of viewpoints; and identify the three-dimensional object and the reference object in the multi-view images by using a pre-configured image recognition model, and obtaining the first orientation information based on a first relative directional relationship between the three-dimensional object and the reference object in the multi-view images.

In an exemplary embodiment, the first orientation determining module 1510 is configured to: input an image sequence formed by the multi-view images and a prompt text into the image recognition model, where the prompt text includes reference direction information corresponding to the local coordinate system, a reference direction indicated by the reference direction information is defined based on the reference object, and the image recognition model is configured to identify the three-dimensional object and the reference object in the multi-view images, and obtain the first orientation information based on the first relative directional relationship between the three-dimensional object and the reference object in the multi-view images; and receive the first orientation information output by the image recognition model, where the first orientation information includes an included angle between the orientation of the three-dimensional object in the local coordinate system and the reference direction.

In an exemplary embodiment, the first orientation determining module 1510 is configured to: determine, based on a type of the three-dimensional object, a to-be-identified component located on the three-dimensional object; and identify the three-dimensional object, the reference object, and the to-be-identified component in the multi-view images by using the image recognition model, and obtain the first orientation information based on the first relative directional relationship between the three-dimensional object and the reference object in the multi-view images and a second relative directional relationship between the to-be-identified component and the reference object in the multi-view images.

In an exemplary embodiment, the second orientation determining module 1520 is configured to: establish an oriented bounding box corresponding to the three-dimensional object, and determine an axial direction of the oriented bounding box; and construct a first geometric constraint based on the axial direction of the oriented bounding box, and determine the second orientation information conforming to the first geometric constraint.

In an exemplary embodiment, the second orientation determining module 1520 is configured to: determine a symmetry plane of the three-dimensional object; and construct a second geometric constraint based on a normal vector of the symmetry plane, and determine the second orientation information conforming to the second geometric constraint.

In an exemplary embodiment, the decision module 1530 is configured to: determine the current orientation from a first orientation and a second orientation based on a first confidence level corresponding to the first orientation information and a second confidence level corresponding to the second orientation information, where the first orientation and the second orientation respectively are directions indicated by the first orientation information and the second orientation information; or in a case where a deviation between the first orientation and the second orientation is greater than a deviation threshold, determine the second orientation as the current orientation; or in a case where the second orientation information indicates a plurality of second orientations, determine the first orientation as the current orientation.

In an exemplary embodiment, the decision module 1530 is configured to: in a case where the deviation between the first orientation and the second orientation is greater than the deviation threshold, or both the first confidence level and the second confidence level are less than a confidence threshold, generate review prompt information corresponding to the three-dimensional object; and in response to receiving a review result corresponding to the review prompt information, determine a direction indicated by the review result as the current orientation.

FIG. 16 is a schematic diagram of a structure of an apparatus for determining a direction of a three-dimensional object according to another exemplary embodiment of the present disclosure. As shown in FIG. 16, in an exemplary embodiment, the apparatus 1500 for determining a direction of a three-dimensional object further includes a calibration module 1540, configured to: rotate the three-dimensional object based on the included angle between the current orientation and the reference direction, so that a new current orientation corresponding to the rotated three-dimensional object points toward the reference direction.

### Exemplary electronic device

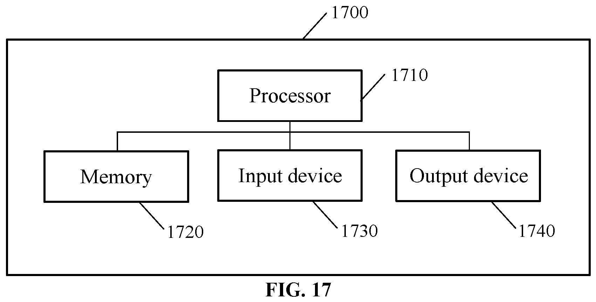

FIG. 17 is a diagram of a structure of an electronic device according to an exemplary embodiment of the present disclosure. As shown in FIG. 17, an electronic device 1700 includes at least one processor 1710 and a memory 1720.

The processor 1710 may be a central processing unit (CPU) or another form of processing unit having a data processing capability and/or an instruction execution capability, and may control another component in the electronic device 1700 to perform a desired function.

The memory 1720 may include one or more computer program products, which may include various forms of computer readable storage media, such as a volatile memory and/or a non-volatile memory. The volatile memory may include, for example, a random access memory (RAM) and/or a cache. The non-volatile memory may include, for example, a read-only memory (ROM), a hard disk, or a flash memory. One or more computer program instructions may be stored on the computer readable storage medium. The processor 1710 may run the one or more computer program instructions to implement the method for determining a direction of a three-dimensional object according to various embodiments of the present disclosure that are described above and/or other desired functions.

In an example, the electronic device 1700 may further include an input device 1730 and an output device 1740. These components are interconnected through a bus system and/or other forms of connection mechanisms (not shown).

The input device 1730 may further include, for example, a keyboard or a mouse.

The output device 1740 may output various information to the outside, and may include, for example, a display, a speaker, a printer, a communication network, and a remote output device connected to the communication network.

Certainly, for simplicity, FIG. 17 shows only some of the components in the electronic device 1700 that are related to the present disclosure, and components such as a bus and an input/output interface are omitted. In addition, according to specific applications, the electronic device 1700 may also include any other appropriate components.

### Exemplary computer program product and computer readable storage medium

In addition to the foregoing method and device, embodiments of the present disclosure may also relate to a computer program product including computer program instructions that, when run by a processor, cause the processor to perform the steps, of the method for determining a direction of a three-dimensional object according to the embodiments of the present disclosure, that are described in the "Exemplary method" section of this specification.

The computer program product may be program code, written with one or any combination of a plurality of programming languages that is configured to perform the operations in the embodiments of the present disclosure. The programming languages include an object-oriented programming language such as Java or C++, and further include a conventional procedural programming language such as a "C" language or a similar programming language. The program code may be entirely or partially executed on a user computing device, executed as an independent software package, partially executed on the user computing device and partially executed on a remote computing device, or entirely executed on the remote computing device or a server.

In addition, the embodiments of the present disclosure may further relate to a computer readable storage medium, on which computer program instructions are stored. The computer program instructions, when run by the processor, cause the processor to perform the steps, of the method for determining a direction of a three-dimensional object according to the embodiments of the present disclosure, that are described in the "Exemplary method" section of this specification.

The computer readable storage medium may be one readable medium or any combination of a plurality of readable media. The readable medium may be a readable signal medium or a readable storage medium. The readable storage medium may include, for example but is not limited to electrical, magnetic, optical, electromagnetic, infrared, or semiconductor systems, apparatuses, or devices, or any combination of the above. More specific examples (a non-exhaustive list) of the readable storage medium include: an electrical connection with one or more conducting wires, a portable disk, a hard disk, a random access memory (RAM), a read-only memory (ROM), an erasable programmable read-only memory (EPROM or a flash memory), an optical fiber, a portable compact disc read-only memory (CD-ROM), an optical storage device, a magnetic storage device, or any suitable combination of the above.

Basic principles of the present disclosure are described above in combination with specific embodiments. However, it should be pointed out that advantages, superiorities, and effects mentioned in the present disclosure are merely examples rather than limitations, and it cannot be considered that these advantages, superiorities, and effects are necessary for the embodiments of the present disclosure. In addition, the specific details disclosed above are merely for examples and for ease of understanding, rather than for limitations. The details described above do not limit the present disclosure to necessarily adopting the foregoing specific details for implementation.

The block diagrams of the equipment, the apparatus, the device, and the system involved in the present disclosure are merely exemplary examples and are not intended to require or imply that the equipment, the apparatus, the device, and the system must be connected, arranged, and configured in the manners shown in the block diagrams. It is recognized by a person skilled in the art that, the equipment, the apparatus, the device, and the system may be connected, arranged, and configured in an arbitrary manner. The terms such as "include", "contain", and "have" are open terms that mean "including but not limited to", and can be used interchangeably with "including but not limited to". The terms "or" and "and" used herein refer to the term "and/or", and can be used interchangeably with "and/or", unless the context clearly indicates otherwise. The term "such as" used herein refers to the phrase "such as but not limited to", and can be used interchangeably with "such as but not limited to".

It should be further pointed out that, various components or various steps in the apparatus, the device, and the methods of the present disclosure may be disassembled and/or recombined. These disassembling and/or recombinations shall be regarded as equivalent solutions of the present disclosure.

The foregoing description about the disclosed aspects is provided, so that the present disclosure can be arrived at or carried out by any person skilled in the art. Various modifications to these aspects are very obvious to a person skilled in the art. Moreover, general principles defined herein may be applicable to other aspects without departing from the scope of the present disclosure. Therefore, the present disclosure is not intended to be limited to the aspects illustrated herein, but to the widest scope consistent with the principles and novel features disclosed herein.

The foregoing descriptions are given for illustration and description. In addition, the description is not intended to limit the embodiments of the present disclosure to forms disclosed herein. Although a plurality of exemplary aspects and embodiments have been discussed above, a person skilled in the art may recognize certain variations, modifications, changes, additions, and sub-combinations thereof.

## Claims

1. A method for determining a direction of a three-dimensional object, comprising:
determining (100) first orientation information corresponding to the three-dimensional object based on the three-dimensional object and a reference object, wherein the reference object is disposed in a preset direction in a local coordinate system corresponding to the three-dimensional object;
determining (200) second orientation information corresponding to the three-dimensional object based on a geometric feature of the three-dimensional object; and
determining (300) a current orientation of the three-dimensional object in the local coordinate system based on the first orientation information and the second orientation information.

2. The method for determining a direction of a three-dimensional object according to claim 1, wherein the determining (100) first orientation information corresponding to the three-dimensional object based on the three-dimensional object and a reference object comprises:
generating (110) multi-view images containing the three-dimensional object and the reference object from a plurality of viewpoints; and
identifying (120) the three-dimensional object and the reference object in the multi-view images by using a pre-configured image recognition model, and determining the first orientation information based on a first relative directional relationship between the three-dimensional object and the reference object in the multi-view images.

3. The method for determining a direction of a three-dimensional object according to claim 2, wherein the identifying (120) the three-dimensional object and the reference object in the multi-view images by using a pre-configured image recognition model, and determining the first orientation information based on a first relative directional relationship between the three-dimensional object and the reference object in the multi-view images comprises:
inputting (121) an image sequence formed by the multi-view images and a prompt text into the image recognition model, wherein the prompt text comprises reference direction information corresponding to the local coordinate system, a reference direction indicated by the reference direction information is defined based on the reference object, and the image recognition model is configured to identify the three-dimensional object and the reference object in the multi-view images, and determine the first orientation information based on the first relative directional relationship between the three-dimensional object and the reference object in the multi-view images; and
receiving (122) the first orientation information output by the image recognition model, wherein the first orientation information comprises an included angle between the orientation of the three-dimensional object in the local coordinate system and the reference direction.

4. The method for determining a direction of a three-dimensional object according to claim 2, wherein the identifying (120) the three-dimensional object and the reference object in the multi-view images by using a pre-configured image recognition model, and determining the first orientation information based on a first relative directional relationship between the three-dimensional object and the reference object in the multi-view images comprises:
determining (123), based on a type of the three-dimensional object, a to-be-identified component located on the three-dimensional object; and
identifying (124) the three-dimensional object, the reference object, and the to-be-identified component in the multi-view images by using the image recognition model, and determining the first orientation information based on the first relative directional relationship between the three-dimensional object and the reference object in the multi-view images and a second relative directional relationship between the to-be-identified component and the reference object in the multi-view images.

5. The method for determining a direction of a three-dimensional object according to any one of claims 1-4, wherein the determining (200) second orientation information corresponding to the three-dimensional object based on a geometric feature of the three-dimensional object comprises:
establishing (210) an oriented bounding box corresponding to the three-dimensional object, and determining an axial direction of the oriented bounding box; and
constructing (220) a first geometric constraint based on the axial direction of the oriented bounding box, and determining the second orientation information conforming to the first geometric constraint.

6. The method for determining a direction of a three-dimensional object according to any one of claims 1-4, wherein the determining (200) second orientation information corresponding to the three-dimensional object based on a geometric feature of the three-dimensional object comprises:
determining (230) a symmetry plane of the three-dimensional object; and
constructing (240) a second geometric constraint based on a normal vector of the symmetry plane, and determining the second orientation information conforming to the second geometric constraint.

7. The method for determining a direction of a three-dimensional object according to any one of claims 1-6, wherein the determining (300) a current orientation of the three-dimensional object in the local coordinate system based on the first orientation information and the second orientation information comprises:
determining (310) the current orientation from a first orientation and a second orientation based on a first confidence level corresponding to the first orientation information and a second confidence level corresponding to the second orientation information, wherein the first orientation and the second orientation respectively are directions indicated by the first orientation information and the second orientation information; or
in a case where a deviation between the first orientation and the second orientation is greater than a deviation threshold, determining the second orientation as the current orientation; or
in a case where the second orientation information indicates a plurality of second orientations, determining the first orientation as the current orientation.

8. The method for determining a direction of a three-dimensional object according to claim 7, wherein the determining (300) a current orientation of the three-dimensional object in the local coordinate system based on the first orientation information and the second orientation information comprises:
in a case where the deviation between the first orientation and the second orientation is greater than the deviation threshold, or both the first confidence level and the second confidence level are less than a confidence threshold, generating (340) review prompt information corresponding to the three-dimensional object; and
in response to receiving a review result corresponding to the review prompt information, determining (350) a direction indicated by the review result as the current orientation.

9. The method for determining a direction of a three-dimensional object according to any one of claims 1-8, wherein after the determining a current orientation of the three-dimensional object in the local coordinate system, the method further comprises:
rotating (400) the three-dimensional object based on an included angle between the current orientation and a reference direction, so that a new current orientation corresponding to the rotated three-dimensional object points toward the reference direction.

10. An apparatus (1500) for determining a direction of a three-dimensional object, wherein the apparatus comprises:
a first orientation determining module (1510), configured to determine first orientation information corresponding to the three-dimensional object based on the three-dimensional object and a reference object, wherein the reference object is disposed in a preset direction in a local coordinate system corresponding to the three-dimensional object;
a second orientation determining module (1520), configured to determine second orientation information corresponding to the three-dimensional object based on a geometric feature of the three-dimensional object; and
a decision module (1530), configured to determine a current orientation of the three-dimensional object in the local coordinate system based on the first orientation information and the second orientation information.

11. The apparatus according to claim 10, wherein the first orientation determining module (1510) is configured to: generate multi-view images containing the three-dimensional object and the reference object from a plurality of viewpoints, identify the three-dimensional object and the reference object in the multi-view images by using a pre-configured image recognition model, and determine the first orientation information based on a first relative directional relationship between the three-dimensional object and the reference object in the multi-view images.

12. The apparatus according to claim 10 or 11, wherein the second orientation determining module (1520) is configured to: establish an oriented bounding box corresponding to the three-dimensional object, determine an axial direction of the oriented bounding box, construct a first geometric constraint based on the axial direction of the oriented bounding box, and determine the second orientation information conforming to the first geometric constraint.

13. The apparatus according to any one of claims 10-12, further comprising a calibration module (1540), configured to: rotate the three-dimensional object based on an included angle between the current orientation and a reference direction, so that a new current orientation corresponding to the rotated three-dimensional object points toward the reference direction.

14. An electronic device (1700), comprising one or more processors (1710) and a memory (1720), wherein the memory stores computer instructions; and the computer instructions, when run by the processors, cause the processors to implement the method according to any one of claims 1-9.

15. A computer readable storage medium having computer program instructions stored thereon, that, when run by a processor, cause the processor to implement the method according to any one of claims 1-9.
